Europäisches Patentamt

European Patent Office

Office européen des brevets

(19)

(11) Publication number: **0 449 372 A2**

## EUROPEAN PATENT APPLICATION

(21) Application number: **91200669.9**

(22) Date of filing: **26.03.91**

(51) Int. Cl.⁵: **B60J 1/14**

(30) Priority: **28.03.90 IT 1985790**

(43) Date of publication of application:
**02.10.91 Bulletin 91/40**

(84) Designated Contracting States:
**AT CH DE ES FR GB LI**

(71) Applicant: **SESSA PASQUALE S.p.A.**
**Corso Repubblica 25**
**I-15057 Tortona-Allessandria(IT)**

(72) Inventor: **Sessa, Terenzio**
**Via Albani 5**
**I-21100 Varese(IT)**

(74) Representative: **Martegani, Franco et al**
**Via Damiano Chiesa, 56**
**I-20099 Sesto San Giovanni (Milano)(IT)**

(54) Tilting window for vehicles with improved spring system allowing positive setting of the moving window open and closed positions.

(57) A tilting window for vehicles, for instance motor coaches, comprising in combination: a peripheral frame secured to the vehicle shell, an eventual fixed window, an intermediate moulded traverse, a moving window hinged to the said traverse by way of an assembly section so as to allow movement from a closed position to an open position, and a spring system allowing positive setting of the open and closed positions of the moving window. From the window traverse a slanting section extends inwards marking by means of a stop on the assembly section, a retaining recess within which the said springs are freely inserted in assembly of the moving window. On closing the moving window, the springs are pushed and compressed automatically by the stop into an operative position between channel-like seatings in the assembly section and the slanting section of the traverse.

Fig.2

The present invention relates to a window of the so-called tilting type intended for vehicles, such as motor and railway coaches, complete with a spring system allowing positive setting of the moving window closed and open positions.

A window of the above type is described for instance in German patent 3044451.

In short, the window object of German patent 3044451 structurally consists of a peripheral frame which is secured to the vehicle shell, a fixed window eventually, an intermediate moulded traverse, and a moving window hinged from the traverse by means of an assembly section.

The moving window can thus move between a closed position and an open position which for obvious operational and safety reasons, must be positively defined by means of suitable positioning means. For that purpose the German patent in question proposes the use of a spring system comprising a second assembly section screwed to the above traverse of the window in such a way as to mark by means of the first section quoted above a retaining seat for the said springs.

The system has the inconvenience that in both cases, on assembling and dismantling the moving window, the application and removal operations for the second section screwed to the window traverse involves fatigue on the part of the operator due to the action of the springs under tension upon the securing screws of the second section.

In addition, the fact that the said second section consists of a component separate from the window traverse frequently further complicates the above installation and dismantling operations for the moving window, which require a certain amount of time.

Finally, the second section represents additional manufacturing costs, since the necessary tooling must be prepared.

Tilting windows are also known in which the second section is hinged from the window traverse in order to facilitate assembly and dismantling operations for the moving window.

However, in these windows also the operations for securing by means of screws the second moving section to the traverse are made more difficult by the fact that the springs have to be compressed.

The general purpose of the present invention is to eliminate the inconveniences of known technique by way of a tilting window design with a structure and complete with a spring system in such a manner as to greatly facilitate both installation and dismantling operations for the moving window.

Another purpose of the invention is to achieve a window of the above type with a minimum number of components, thus being economic in construction.

In view of the above purposes, according to the invention, the notion has been to achieve a tilting window for vehicles, for instance motor- and rail-coaches and others of similar type comprising in combination: a peripheral frame secured to the vehicle shell, a fixed window, an intermediate moulded traverse, a moving window hinged to the said traverse by means of an assembly section, in such a manner as to be movable from a closed position to an open position, and a spring system able to provide positive setting of the closed and open positions for the moving window, characterised in that the said spring system consists of a section (19) extending in an integral and sloping manner from the said traverse (14) in such a way as to mark by means of a stop (24) on the assembly section (17) a recess in which the said springs (18) can be freely inserted at the time of assembly of the said moving window (15), the section (19) and the stop (24) also having channel-like seatings (21,25) within which the springs (18) are automatically pushed and compressed - in operational position - by the closure of the moving window (15).

The structural and functional features of the invention and its advantages compared with known technique are more readily understood from an examination of the following description, with reference to the appended drawings, which shown an example of a window actuated according to the principle of the invention itself. In the drawings:

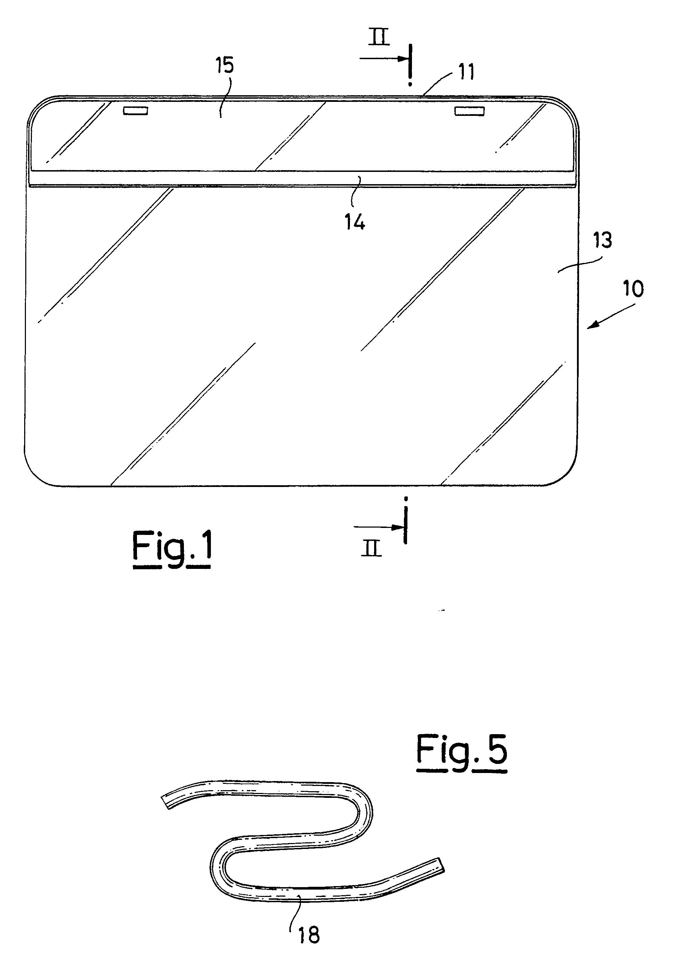

- Figure 1 is a schematic view illustrating the window according to the invention from the inside;
- Figure 2 is a section in the plane of line II-II in Figure 1 illustrating the moving window in the closed position;
- Figure 3 is a section as in Figure 2 but illustrating the moving window in the open position;
- Figure 4 is a section as in Figure 2 but illustrating the assembly and/or dismantling phases for the springs; and
- Figure 5 is a detail illustrating the system spring.

In the drawings the tilting window unit referred to here is shown under reference 10 and consists structurally of a combination of a peripheral frame 11, secured to the shell 12 of the vehicle by means of a known system, of a fixed window 13, of an intermediate moulded traverse 14, and of a moving window 15 hinged at point 16 from the traverse 14.

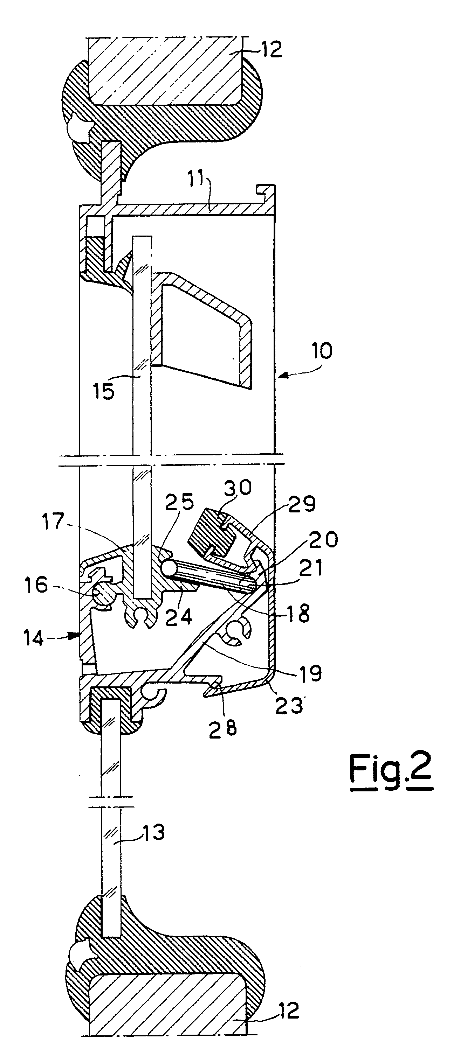

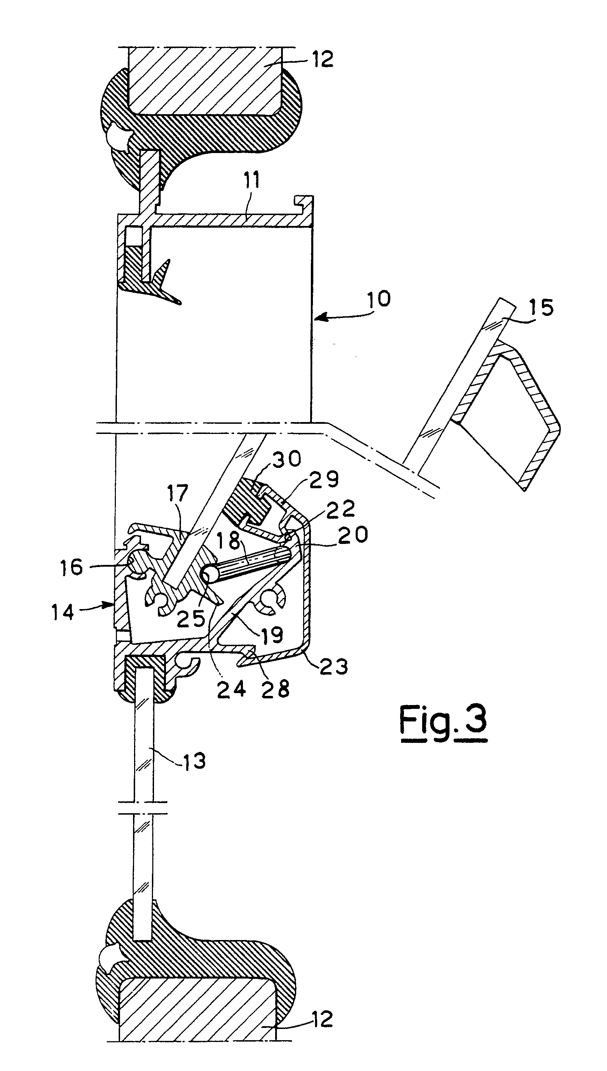

As will be clearly seen in Figures 2-4 of the drawings, the assembly of the moving window 15 on traverse 14 is actuated by means of a section 17, for which the window 15 is movable - rotating about 16 - between the closed position shown in Figure 2 and the open position shown in Figure 3.

The said closed and open two positions are defined in a positive manner by means of a system involving a series of springs 18 seated between the assembly section 17 and traverse 14.

For that purpose, traverse 14 typically has a section 19, extending obliquely towards the inside of the window and intended to operate in conjunction with section 17 to house the springs 18. More specifically, the said oblique section 19 has an ending 20 marking a channel-like seating 21, for one side of spring 18, or a release anchorage recess 22 for a cover section 23.

To house the opposing end of spring 18, with section 19 of traverse 14, a stop 24 projecting from section 17 is provided and a channel-like seating 25 which is marked (as clearly shown in the drawings) by the stop 24 and the body of section 17.

The tilting window operation will be clearly understood from the above description following reference to the figures, and is briefly as follows.

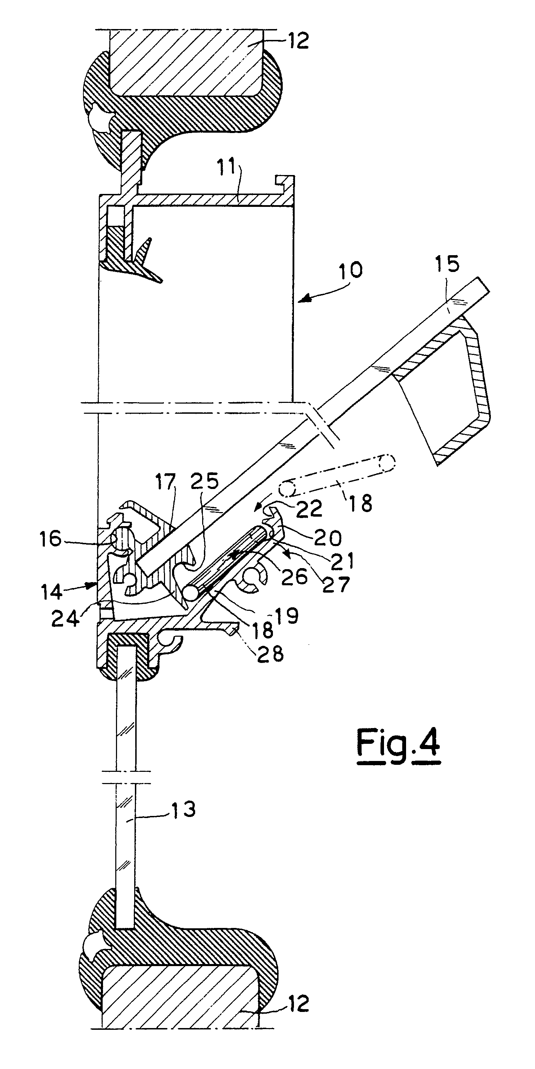

After fitting the moving window 15 in the position shown in Figure 4, the springs 18 can be freely inserted into the recess marked by section 19 and the stop 24 against which the springs 18 will come to bear.

According to this invention, the springs 18 are under tension and automatically housed in the seatings 21 and 25 by simply rotating the moving window 15 from the non-operative position in Figure 4 to the closed position In Figure 2; this is by way of the typical actuation exerted by stop 24 upon springs 18, which are first pushed axially - in the direction of arrow 26 - against the projection 20, then rotated - anti-clockwise as shown by arrow 27 - for release between the channel-like seatings 21 and 25.

It will be clearly seen that with the window according to the invention, this eliminates all inconveniences deriving from the presence of a second assembly section having to be secured to the traverse.

After the operation described above the cover section 23 can be applied to recess 22 for future removal and to the tooth 28 of traverse 14.

It should also be noted here that the cover section 23 has a seating 29 for a moving stroke component 30 preventing the opening stroke of the moving window 15 in such a manner as to prevent discharge of springs 18.

The spring system described above may be simply dismantled by removing section 23 and bringing the moving window 15 into the position as in Figure 4, whereby the springs 18 are unloaded and can be freely taken out of their seating.

In this way the purpose described In the preamble to the description is achieved.

## Claims

1. Tilting window for vehicles, for example motor- and rail-coaches and the like of the type comprising in combination: a peripheral frame (11) secured to the vehicle shell (12), a fixed window (13), an intermediate moulded section (14), a moving window (15) hinged from the said traverse (14) by means of an assembly section (17) in such a way as to be movable between the closed - and open - positions, and a spring system (18) able to provide positive settings for the closed and open positions of the moving window (15), characterised in that, the said spring system consists of a section (19) integrally and obliquely extending from the said traverse (14) in such a way as to mark by means of a stop (24) on the assembly section (17) a recess in which the said springs (18) are freely inserted at the time of assembly of the moving window (15), the section (19) and the stop (24) also having channel-like seatings (21,25) between which the springs (18) are automatically pushed and compressed - in the operative position - by the closure of the moving window (15).

2. Window according to claim 1, characterised in that, the said moving window (15) cooperates in conjunction with a stroke component (30) able to stop the opening stroke of the moving window (15) in such a position as to prevent the discharge of the springs (18).

3. Window according to claim 2, characterised in that, the said stroke component is fitted to a cover component (23) applied to section (19) of traverse (14).

4. Window according to claim 3, characterised in that, the said cover component (23) is applied to and released from section (19).

Fig.1

Fig.5

Fig.2

EP 0 449 372 A2

Fig.3

Fig.4